**Europäisches Patentamt**

**European Patent Office**

**Office européen des brevets**

(19)

(11) Veröffentlichungsnummer: **0 206 267 B1**

(12) # EUROPÄISCHE PATENTSCHRIFT

(45) Veröffentlichungstag der Patentschrift:
**02.01.91 Patentblatt 91/01**

(51) Int. Cl.⁵: **C08L 67/02**, C08L 69/00,
// (C08L67/02, 69:00,
23:02),(C08L69/00, 67:02,
23:02)

(21) Anmeldenummer: **86108391.3**

(22) Anmeldetag: **19.06.86**

(54) **Kälteschlagzähe thermoplastische Formmassen aus Polyester und Polycarbonat.**

(30) Priorität: **20.06.85 DE 3521956**

(43) Veröffentlichungstag der Anmeldung:
**30.12.86 Patentblatt 86/52**

(45) Bekanntmachung des Hinweises auf die
Patenterteilung:
**02.01.91 Patentblatt 91/01**

(84) Benannte Vertragsstaaten:
**BE DE FR GB IT NL**

(56) Entgegenhaltungen:
**EP-A- 0 180 648
FR-A- 2 311 808
JP-A-51 089 558
PATENT ABSTRACTS OF JAPAN, Band 9, Nr.
28 (C-264) [1751], 6. Februar 1985; & JP-A-59
174 646**

(56) Entgegenhaltungen:
**Encyclopedia of Polymer Science and
Technology, volume 14, John Wiley & Sons,
1971, pages 354-355
"Neue polymere Werkstoffe für die
industrielle Anwendung", Elias/Vohwinkel,
Hanser 1983, München, DE, Seiten 201-206**

(73) Patentinhaber: **BASF Aktiengesellschaft
Carl-Bosch-Strasse 38
D-6700 Ludwigshafen (DE)**

(72) Erfinder: **Taubitz, Christof, Dr.
In der Dreispitz 15
D-6706 Wachenheim (DE)**
Erfinder: **Hub, Hans-Henning, Dr.
Hermsheimer Hauptstrasse 127 a
D-6520 Worms 24 (DE)**
Erfinder: **Ziegler, Walter, Dr.
Starenweg 15
D-6803 Edingen-Neckarhausen (DE)**
Erfinder: **Sadlowski, Juergen, Dr.
Bodelschwinghstrasse 29 b
D-4400 Muenster-Hiltrup (DE)**

## Beschreibung

Gegenstand der Erfindung sind Kälteschlagzähe thermoplastische Formmassen aus Polyester und Polycarbonat, die neben einer guten Kälteschlagzähigkeit eine sehr gute Lochkerbschlagzähigkeit bei tiefen Temperaturen aufweisen und sich durch eine hohe Wärmeformbeständigkeit auszeichnen.

Polymermischungen aus thermoplastischen Polyestern und Polycarbonat sind aus der DE-A-24 17 002 bekannt. Sie weisen gegenüber den reinen Polyestern ein verbessertes mechanisches Niveau auf. Es wurde auch bereits versucht, die Schlagzähigkeit von Polyester/Polycarbonatmischungen durch Zusatz von Elastomeren zu verbessern. Geeignete Modilizierungsmittel sind entsprechend DE-PS 2 343 609 Pfropfcopolymere auf Basis Polybutadien. In der EP-A 20 605 werden hierfür auch PolyacrylatpfropIkautschuke empfohlen. In der EP-A 20 737 werden Mischungen beschrieben, in denen Polyester/Polycarbonatgemisch mit Styrol-Dien-Blockcopolymeren modiliziert sind. Aus der DE-OS 2 622 876 sind auch Mischungen bekannt, die aus Polycarbonat und Ethylencopolymeren oder aus Polyester und einem Ethylencopolymeren bestehen. Der Zusatz des Copolymeren erfolgt zur Verbesserung der Zähigkeit. Entsprechend der DE-OS 3 234 174 wurden auch schon Mischungen aus Polycarbonaten und Polyestern, Ethylencopolymere mit Carboxylgruppen zugesetzt.

Alle bekannten Mischungen zeigen jedoch bei tiefen Temperaturen unbefriedigende Kerbschlagzähigkeiten, insbesondere wurde die Kombination von Schlagzähigkeit bei tiefen Temperaturen und zugleich hohe Wärmeformbeständigkeit nicht erreicht.

Es war deshalb die technische Aufgabe gestellt, schlagzähe thermoplastische Formmassen zur Verlügung zu stellen, die sich durch gute mechanische Eigenschaften auszeichnen und in Kombination guten Lochkerbschlagzähigkeit bei tiefen Temperaturen und Wärmeformbeständigkeit aufweisen.

Diese Aufgabe wird gelöst durch kälteschlagzähe, thermoplastische Formmassen aus Polyester und Polycarbonat, enthaltend :

(A) 5 bis 94 Gew.-Teile mindestens eines aliphatischen Polyesters einer aromatischen Dicarbonsäure

(B) 5 bis 94 Gew.-Teile mindestens eines aromatischen Polycarbonats

(C) 1 bis 40 Gew.-Teile mindestens eines Olefinpolymeren, aufgebaut aus

(a) 50-98 Gew.-% Ethylen,

(b) 1-40 Gew.-% Glycidyl(meth)acrylat,

(c) 1-45 Gew.-% n-Butylacrylat und/oder 2-Ethylhexylacrylat,

wobei sich die Komponenten A, B und C jeweils auf 100 Gew.-Teile ergänzen, sowie

(D) gegebenenfalls Zusatzstoffe in wirksamen Mengen.

Die neuen schlagzähen thermoplastischen Formmassen zeichnen sich durch ein gutes mechanisches Niveau zusätzlich gute Kerbschlagzähigkeiten bei tiefen Temperaturen bei guten Lochkerbschlagzähigkeiten in Kombination mit hoher Wärmeformbeständigkeit aus.

Die entsprechend der Erfindung verwendeten Polyester (Komponente A) sind an sich bekannt. Sie besitzen Ketteneinheiten, die einen gegebenenfalls substituierten aromatischen Ring in der Polymerkette enthalten. Beispiele für derartige Substituenten des aromatischen Rings sind Halogene, wie Chlor oder Brom, $C_1$- bis $C_4$-Alkylgruppen, wie Methyl-, Ethyl-, Propyloder Butylgruppen. Geeignete Polyester werden beispielsweise hergestellt durch Reaktion der entsprechenden aromatischen Dicarbonsäuren, deren Ester oder deren esterbildender Derivate mit Dihydroxiverbindungen in an sich bekannter Weise. Geeignete Dihydroxiverbindungen sind beispielsweise Glykole mit 2 bis 6 Kohlenstoffatomen, insbesondere Ethylenglykol, 1,4-Butandiol, 1,4-Butendiol, 1,6-Hexandiol, ferner 1,4-Hexandiol, 1,4-Cyclohexandiol, 1,4-Bis-(hydroximethyl)-cyclohexan, Bisphenol A, Neopentylglykol oder deren Mischungen.

Geeignete aromatische Dicarbonsäuren sind beispielsweise Naphthalindicarbonsäure, Terephthalsäure, Isophthalsäure, deren esterbildende Derivate und Mischungen davon.

In den Polyestern können die aromatischen Dicarbonsäuren teilweise z.B. : bis zu 10 Mol.-% durch andere Dicarbonsäuren ersetzt sein. Als Modifizierungsmittel kommen aliphatische oder cycloaliphatische Dicarbonsäuren, wie Adipinsäure, Azelainsäure, Sebazinsäure oder Cyclohexandicarbonsäure in Frage.

Bevorzugte Polyester sind Polyalkylenterephthalate, die sich von Alkandiolen mit 2 bis 6 Kohlenstoffatomen ableiten. Bevorzugt sind Polybutylenterephthalat und insbesondere Polyethylenterephthalat. Die Polyester (Komponente A) haben vorteilhaft eine relative Viskosität von l,2 bis 1,8, gemessen in einer 0,5 gew.-%igen Lösung in einem Phenol/o-Dichlorbenzolgemisch von 3 : 2 Gewichtsteilen bei 25°C.

Die erfindungsgemäßen Formmassen enthalten 5 bis 94 Gew.-Teile, insbesondere 10 bis 70 Gew.-Teile mindestens eines aliphatischen Polyesters einer aromatischen Dicarbonsäure.

Die erfindungsgemäß verwendeten aromatischen Polycarbonate (Komponente B) sind an sich bekannt. Sie sind z.B. entsprechend dem Verfahren nach der deutschen Patentschrift 1 300 266 durch Grenzflächenpolykondensation oder gemäß dem Verfahren der deutschen Offenlegungsschrift 1 495 730 durch Ume-

2

sterung von Diphenylcarbonat mit Bisphenol A erhältlich. Anstelle von Bisphenol A können z.B. bis zu 30 Mol.-% andere aromatische Bis-hydroxy-Verbindungen verwendet werden, insbesondere Bis-(4-hydroxyphenyl)-pentan-2,2, 2,6-Dihydroxynaphthalin, Bis-(4-hydroxyphenyl)-sulfon, Bis-(4-hydroxyphenyl)-ether, Bis-(4-hydroxyphenyl)-sulfid, Bis-(4-hydroxyphenyl)-methan, Bis-(4-hydroxyphenyl)-ethan-1,1 oder 4,4'-Dihydroxydiphenyl.

Für den erfindungsgemäßen Zweck geeignete Polycarbonate haben vorteilhaft eine relative Viskosität (gemessen bei 25°C an einer 0,5 gew.-%igen Methylenchloridlösung) von 1,2 bis 1,5, vorzugsweise von 1,28 bis 1,40.

Die erfindungsgemäßen Formmassen enthalten 5 bis 94 Gew.-Teile, vorzugsweise 30 bis 90 Gew.-Teile mindestens eines aromatischen Polycarbonats.

Als Komponente C enthalten die erfindungsgemäßen Formmassen 1 bis 40, vorzugsweise 5 bis 20 Gew.-% mindestens eines Olefinpolymeren, welches Epoxygruppen enthält und aufgebaut ist aus 50-98 Gew.-% EThylen (a), 1-40 Gew.-% Glycidyl(meth)acrylat (b) und 1-45 Gew.-% n-Butylacrylat und/oder 2-Ethylhexylacrylat. Die Epoxy-Gruppen können in das Olefinpolymere durch Copolymerisation oder Pfropfpolymerisation mit Epoxygruppen-tragenden copolymerisierbaren Monomeren oder durch Epoxierung eines reagierenden Olefinpolymeren eingebaut werden.

Die Glastemperatur des Olefinpolymeren liegt vorzugsweise unter 0°C, besonders bevorzugt unter −20°C.

Besonders bewährt haben sich Olefinpolymerisate aus

a) 60 bis 95 Gew.-% Ethylen

b) 3 bis 20 Gew.-% Glycidyl(meth)acrylat

c) 10 bis 35 Gew.-% n-Butylacrylat und/oder 2-Ethylhexylacrylat.

Die Olefinpolymeren können durch beliebige Methoden polymerisiert werden, wie statistische Copolymerisation, Blockcopolymerisation und Pfropfcopolymerisation.

Bevorzugt ist die statistische Copolymerisation unter hohem Druck und bei erhöhter Temperatur. Die Polymere c) sind im allgemeinen hochmolekular und haben einen Schmelzindex (MFI 190/2, 16, DIN 53 735) von 1 bis 80.

Die erfindungsgemäßen Formmassen enthalten zusätzlich gegebenenfalls Zusatzstoffe (D) in wirksamen Mengen, vorzugsweise unter 40 Gew.-%, wie andere Polymere, beispielsweise Kautschuke.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füll- und Verstärkungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögererern und Wärmestabilisatoren, die den thermoplastischen Massen gemäß der Erfindung zugesetzt werden können, gehören diejenigen, die allgemein zu Polymeren zugesetzt werden wie Halogenide von Metallen der Gruppe I des periodischen Systems, z.B. Natrium-, Kalium-, Lithium-Halogenide in Verbindung mit Kupfer-(I)-Halogeniden, z.B. Chlorid, Bromid oder Jodid. Ferner sind geeignete Stabilisatoren, sterisch gehinderte Phenole, Hydrochinone, verschiedene substituierte Vertreter dieser Gruppe und Kombinationen derselben in Konzentrationen bis 1 Gew.-%, bezogen auf das Gewicht der Mischung.

Als UV-Stabilisatoren kann man ebenfalls diejenigen, die allgemein zu Polymeren zugesetzt werden, in Mengen bis zu 2,D Gew.-% auf die Mischung verwenden. Beispiele für UV-Stabilisatoren sind verschiedene substituierte Resorcine, Salicylate, Benzotriazole, Benzophenone und dgl..

Geeignete Gleit- und Entformungsmittel, die z.B. in Mengen bis 1 Gew.-% der thermoplastischen Masse zugesetzt werden, sind Stearinsäuren, Stearylalkohol, Stearinsäureester und -amide.

Ferner können zugesetzt werden organische Farbstoffe, wie Nigrosin, Pigmente, z.B. Titandioxid, Cadmiumsulfid, Cadmiumsulfid-selenid, Phthalocyanine Ultramarinblau oder Ruß. Darüber hinaus können die erfindungsgemäßen Formmassen faser- und pulverförmige Füllstoffe und Verstärkungsmittel, wie Kohlenstoffasern, Glasfasern, amorphe Kieselsäure, Asbest, Calciumsilicat, Calciummethasilicat, Aluminiumsilicat, Magnesiumcarbonat, Kaolin, Kreide, gepulverten Quarz, Glimmer, Feldspat in Mengen bis zu 50 Gew.-%, bezogen auf die Formmasse, enthalten. Ferner können Keimbildungsmittel, wie Talkum, Calciumfluorid, Natriumphenylphosphinat, Aluminiumoxid oder feinteiliges Polytetrafluorethylen in Mengen z.B. bis zu 5 Gew.-%, bezogen auf die Masse, angewandt werden. Weichmacher, wie Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid werden vorteilhaft in Mengen bis etwa 20 gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Die Formmassen gemäß der Erfindung werden z.B. hergestellt, in dem man Polyester (Komponente A) und Polycarbonat (Komponente B) sowie Ethylencopolymeres (Komponente C) mischt und in einer üblichen Mischvorrichtung, wie Schneckenextruder, Barbender-Mühle oder Banbury-Mühle die Elastomeren in das schmelzflüssige Gemisch aus Polyester und Polycarbonat einmischt. Die Masse wird anschließend ausgepreßt, gekühlt und zerkleinert. Die Mischtemperaturen betragen in der Regel 240 bis 350°C, bevorzugt 250 bis 280°C.

Die erfindungsgemäßen Formmassen eignen sich zur Herstellung von hochbeanspruchbaren thermostabilen schlagzähen Formteilen für technische Zwecke aller Art nach dem Spritzguß- oder Extrusionsverfahren.

Der Gegenstand der Erfindung sei in folgenden Beispielen veranschaulicht.

Polyethylenterephthalat (PETP) wurde mit einem Polycarbonat (PC) und den Schlagzähmodifiern intensiv gemischt, in einem Zweischneckenextruder vom Typ ZKS 30 der Fa. Werner und Pfleiderer, bei 270°C aufgeschmolzen, homogenisiert und in ein Wasserbad extrudiert. Nach der Granulierung und Trocknung wurden die Mischungen auf einer Spritzgußmaschine zu Prüfkörpern geformt und diese ohne weitere Nachbehandlung geprüft.

Das eingeseetzte Polyethylenterephthalat hatte eine relative Viskosität von 1,38 gemessen in einer 0,5%igen Lösung in Phenol-o-Dichlorbenzol 1 : 1 bei 25°C.

Das verwendete Polycarbonat auf Bisphenol A-Basis hatte eine relative Viskosität von 1,36 gemessen in einer 0,5%igen Lösung in Methylenchlorid bei 25°C.

Im Vergleichsbeispiel 1 wurde ein Ethylen-Ethylacrylat-Copolymer (E/EA) der Firma Union Carbide mit der Handelsbezeichnung Bakelite DPD-6169 eingesetzt.

Im Vergleichsbeispiel 2 wurde ein LLDPE (linar low density polyethylene-butene-1-copolymer) mit einem MFI 50 g/10 Min. eingesetzt.

Im Vergleichsbeispiel 3 wurde ein Ethylen/n-Butylacrylat-Acrylsäure-Copolymerisat (66 E, 30 n-BA, 4 AS) mit einem MFI 15 g/10 Min. eingesesetzt.

Bei den erfindungsgemäßen Beispielen wurden folgende epoxygruppentragende Copolymere eingesetzt (Tabelle 1) :

### Tabelle 1

| Beispiel Nr. | Copolymerzusammensetzung Gew.-% | MFI 190°C/2, 16 g/10 Min. |
|---|---|---|
| 4, 7, 9, 10 | E-GMA-nBA (70-4-26) | 5 |
| 8 | E-GMA-AHA (73-7-20) | 13 |
| 6 | E-GA-GMA-nBA (62-1-5-32) | 8 |
| 5, 11 | E-AGE-AHA (66-4-30) | 18 |

| | |
|---|---|
| E | = Ethylen |
| GMA | = Glycidylmethacrylat |
| GA | = Glycidylacrylat |
| n-BA | = n-Butylacrylat |
| AHA | = 2-Ethyl-hexylacrylat |
| AGE | = Allylglycidylether |

In Tabelle 2 sieht man die vorteilhaften Eigenschaften der erfindungsgemäßen Mischungen (Beispiel 4 bis 11) gegenüber den Vergleichsbeispielen. Die Mengenangaben sind Gew.-%.

Die Kerbschlagzähigkeit wurde nach DIN 53 453, die der Lochkerbschlagzähigkeit nach DIN 53 753 bestimmt.

4

Tabelle 2

| Beispiel Nr. | PETP % | PC % | Modifier % | Modifier Typ | Kerbschlagz. $a_K$ [kJ/m²] -20° | -40° | Lochkerbschlag-zähigkeit $a_{KL}$ -20° | -40° | -60° |
|---|---|---|---|---|---|---|---|---|---|
| 1* | 40 | 50 | 10 | E-EA | 3,2 | 2,4 | 47 | 43 | 34 |
| 2* | 40 | 50 | 10 | LLDPE | 4,1 | 1,4 | 53 | 40 | 20 |
| 3* | 40 | 50 | 10 | E-nBA-AS | 3,6 | 2,3 | 96 | 59 | 44 |
| 4 | 40 | 50 | 10 | E-GMA-nBA | 15,2 | 6,3 | 94 | 84 | 63 |
| 5 | 40 | 50 | 20 | E-AGE-AHA | 16,2 | 7,8 | 96 | 84 | 72 |
| 6 | 30 | 60 | 10 | E-GA-GMA-nBA | 14,1 | 6,7 | 89 | 75 | 62 |
| 7 | 30 | 55 | 15 | E-GMA-nBA | 19,1 | 11,2 | 94 | 80 | 69 |
| 8 | 25 | 60 | 15 | E-GMA-AHA | 22,1 | 8,5 | 95 | 86 | 73 |
| 9 | 45 | 50 | 5 | E-GMA-nBA | 11,0 | 5,3 | 89 | 73 | 60 |
| 10 | 25 | 65 | 5 | LLDPE | 9,2 | 4,5 | 75 | 65 | 39 |
|  |  |  | 5 | E-GMA-nBA |  |  |  |  |  |
| 11 | 15 | 68 | 17 | E-AGE-AHA | 31,4 | 9,6 | 96 | 82 | 75 |

* = Vergleichsbeispiele

## Ansprüche

1. Kälteschlagzähe thermoplastische Formmassen aus Polyester und Polycarbonat, enthaltend

(A) 5 bis 94 Gew.-Teile mindestens eines aliphatischen Polyesters einer aromatischen Dicarbonsäure,

(B) 5 bis 94 Gew.-Teile mindestens eines aromatischen Polycarbonats,

(C) 1 bis 40 Gew.-Teile mindestens eines Olefinpolymeren, aufgebaut aus

(a) 50 bis 98 Gew.-% Ethylen,

(b) 1 bis 40 Gew.-% Glycidyl(meth)acrylat und

(c) 1 bis 45 Gew.-% n-Butylacrylat und/oder 2-Ethylhexylacrylat

wobei sich die Komponenten A, B und C jeweils auf 100 Gew.-Teile ergänzen, sowie

(D) gegebenenfalls Zusatzstoffe in wirksamen Mengen

2. Kälteschlagzähe thermoplastische Formmassen nach Anspruch 1, dadurch gekennzeichnet, daß als Komponente (D) unter 40 Gew.-% eines Kautschuks enthalten sind.

3. Verwendung der kälteschlagzähen thermoplastischen Formmassen gemäß den Ansprüchen 1-2 zur Herstellung von Formteilen.

4. Formteile, hergestellt aus kälteschlagzähen thermoplastischen Formmassen gemäß den Ansprüchen 1-2.

## Claims

1. A thermoplastic molding material which consists of polyesters and polycarbonates, has good low-temperature impact strength and contains

(A) from 5 to 94 parts by weight of one or more aliphatic polyesters of an aromatic dicarboxylic acid,

(B) from 5 to 94 parts by weight of one or more aromatic polycarbonates,

(C) from 1 to 40 parts by weight of one or more olefin polymers composed of

(a) from 50 to 98% by weight of ethylene,

(b) from 1 to 40% by weight of glycidyl (meth)acrylate and

(c) from 1 to 45% by weight of n-butyl acrylate and/or 2-ethylhexyl acrylate,

components A, B and C summing to 100 parts by weight, and

(D) if required, additives in effective amounts.

2. A thermoplastic molding material having good low-temperature impact strength as claimed in claim 1, which contains less than 40% by weight of rubber as component (D).

3. Use of a thermoplastic molding material having low-temperature impact strength as claimed in claims 1 and 2, for the production of moldings.

4. A molding produced from a thermoplastic molding material having good low-temperature impact strength as claimed in claims 1 and 2.

## Revendications

1. Masses à mouler thermoplastiques résistantes aux chocs à froid à base de polyester et de polycarbonate, se composant de

(A) de 5 à 94 parties en poids d'un polyester aliphatique d'un acide dicarboxylique aromatique

(B) de 5 à 94 parties en poids d'au moins un polycarbonate aromatique,

(C) de 1 à 40 parties en poids d'au moins un polymère oléfinique, se composant de

(a) 50 à 98% en poids d'éthylène,

(b) 1 à 40% en poids de (méth)acrylate de glycidyle et

(c) 1 à 45% en poids d'acrylate de n-butyle et/ou d'acrylate de 2-éthylhexyle,

les composants A, B et C représentant 100 parties en poids, ainsi que de

(D) éventuellement des additifs en quantités usuelles

2. Masses à mouler thermoplastiques résistantes aux chocs à froid selon la revendication 1, caractérisées en ce qu'elles contiennent comme composant (D) moins de 40% en poids d'un caoutchouc.

3. Utilisation des masses à mouler thermoplastiques résistantes aux chocs à froid selon les revendications 1 et 2, pour la préparation d'articles.

4. Articles obtenus à partir des masses à mouler thermoplastiques résistantes aux chocs à froid selon les revendications 1 et 2.